# EUROPÄISCHE PATENTANMELDUNG

(11) **EP 1 533 100 A2**
(43) Veröffentlichungstag der Anmeldung: **25.05.2005**
(21) Anmeldenummer: 04026551.4
(22) Anmeldetag: 09.11.2004
(51) Int. Cl.: B29C 47/00

(54) **Flachlegeeinrichtung bei Blasfolienanlagen**

(30) Priorität: 13.11.2003 DE 10352976
(71) Anmelder: Kiefel Extrusion Gmbh, D-67547 Worms (DE)
(72) Erfinder: Hessenbruch, Rolf, 42855 Remscheid (DE)
(74) Vertreter: Zmyj, Erwin, Dipl.-Ing., Dipl.-Wirtsch.-Ing.

(57) **Zusammenfassung**

Blasfolienanlage mit einer Flachlegung (4), deren Walzen (5) in der oberen Hälfte ganz oder teilweise aus Bürstenrollen (6) bestehen, deren Borsten (5.1, 5.2) schräg nach außen gerichtet sind und die bei Berührung mit dem Folienschlauch (3) eine geringe Spreizkraft auf die Folie ausüben, durch die eine Faltenbildung vermieden wird.

## Beschreibung

Die Erfindung betrifft eine Folienblasanlage zur Herstellung von Kunststoff-Schlauchfolien. Bei diesen Anlagen wird der Folieschlauch aus einer Runddüse extrudiert, abgezogen und dabei gekühlt und anschließend in einer Flachlegeeinrichtung vom runden in den flachgelegten Zustand übergeführt. Die Flachlegung kann aus feststehenden Latten oder mitrotierenden Walzen oder Bürstenwalzen bestehen. Dieser Vorgang des Flachlegens bereitet bei normalelastischen Folien keine Probleme, bei steiferen Folien und/oder bei geringen Folien-Innendruck können sich Falten bilden, die nur sehr schwer zu beseitigen sind, da hierfür keine geeigneten Mittel zur Verfügung stehen. Es wurden innerhalb des Folienschlauches Spreizeinrichtungen verwendet, die sich aber nicht durchgesetzt haben, da die Handhabung zu schwierig war.

Zweck der vorliegenden Erfindung ist es, diesen Nachteil durch eine geeignete Vorrichtung zu verhindern. Es ist bekannt, dass beim Flachlegen des Folienschlauches aufgrund der geometrischen Verhältnisse unterschiedliche Längen auftreten zwischen Mitten- und Seitenbereich, was zur Faltenbildung führen kann. Kann man auf die Folie während des Flachlegens eine Querkraft aufbringen, lassen sich die Falten durch Querausziehen vermeiden. Hierfür bietet die Erfindung eine geeignete Vorrichtung in Form von rotierenden Bürstenwalzen, die während der Rotation Quer- bzw. Spreizkräfte auf die Folie wirken lassen. Dies erfolgt erfindungsgemäß dadurch, dass solche Bürstenwalzen im oberen Bereich der Flachlegung zum Einsatz kommen, die mit von der Mitte aus nach außen gerichteten schrägen Borsten versehen sind und die schon bei leichter Berührung eine leichte Kraft auf die Folie ausüben, die zur Beseitigung von Falten führt.

Anhand der beigefügten Zeichnungen wird die Erfindung näher erläutert. Es zeigen
Figur 1 schematisch eine Blasfolienanlage
Figur 2 eine Bürstenwalze mit nach außen gerichteten Borsten
Figur 3 eine Bürstenwalze mit schrägen Borsten und spiralförmig angeordneten Borsten
Figur 4 zeigt eine Blasfolienanlage mit den Spreizwalzen im oberen Teil der Flachlegung

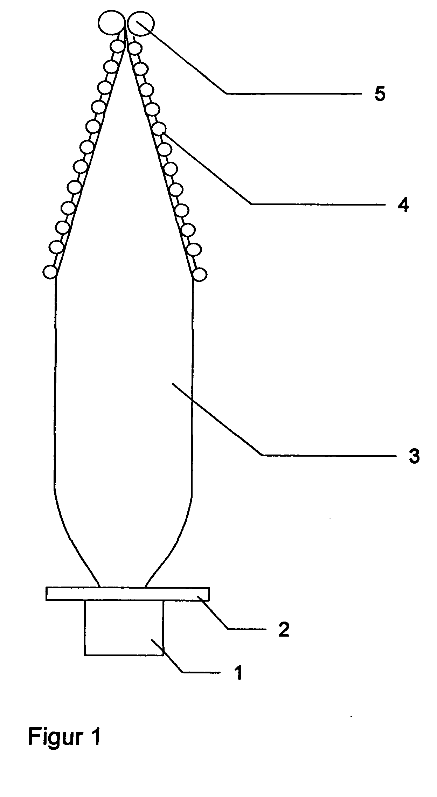

Figur 1 zeigt den Ausschnitt einer Blasfolienanlage mit dem Blaskopf 1 und dem Luftkühlring 2. Aus dem Blaskopf 1 wird ein runder Schlauch 3 extrudiert, der mittels des Kühlringes 2 gekühlt wird. Der runde Folienschlauch 3 wird in der Flachlegung 4 mittels Rollen flachgelegt. Die Abzugswalzen 5 ziehen den Schlauch ab.

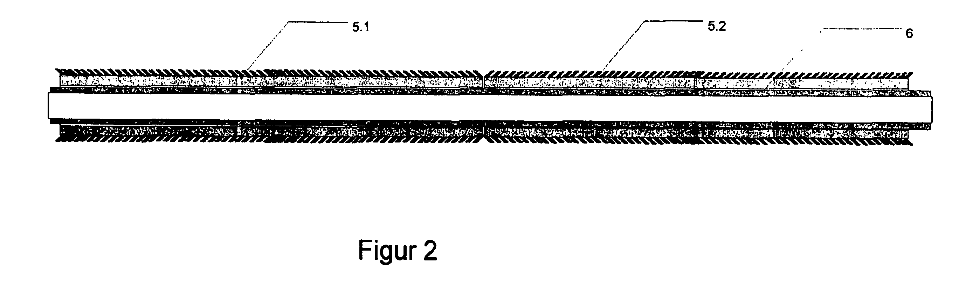

Figur 2 zeigt eine Bürstenwalze 6 mit nach außen gerichteten Borsten 5.1 und 5.2. Die Spreizwirkung entsteht dadurch, dass bei einer leichten Berührung der Borsten durch den Folienschlauch diese nach außen nachgeben und dadurch eine Bewegung nach außen entsteht. Dies führt zu einer ausreichenden Querkraft auf die Folie.

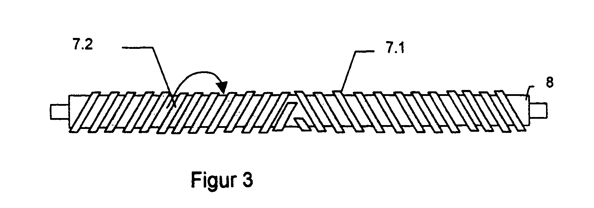

Figur 3 zeigt eine andere Bürstenwalze 8, bei der ebenfalls die Borsten 7.1 und 7.2 nach außen gerichtet sind, bei der aber die Borsten zusätzlich noch spiralförmig angeordnet sind und somit bei einer drehenden Bewegung auf die Folie eine höhere Spreizwirkung nach außen ausgeübt wird.

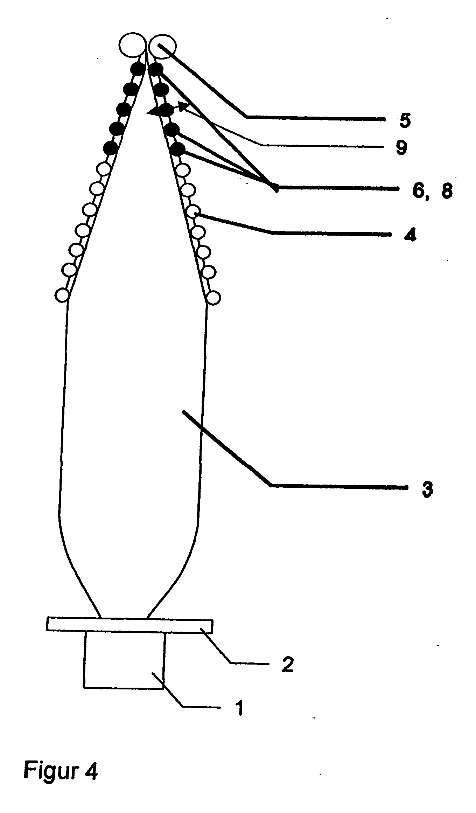

Figur 4 zeigt schematisch eine Blasfolienanlage, bei der in der Flachlegung im oberen Bereich die Bürstenrollen 8 mit der Spreizwirkung eingebaut sind. Hierbei ist von besonderer Bedeutung, dass die oberste Walze als Spreizwalze ausgebildet ist, die darunter angeordneten Spreizwalzen unterstützen die Wirkung, in der unteren Hälfte der Flachlegung sind die Spreizwalzen aber nicht notwendig. Da die Wirkung der Spreizung auch von der Kontaktfläche abhängt, ist es zweckmäßig, die Spreizwalzen 6 bzw. 8 verschiebbar 9 anzuordnen, so dass die Spreizwalzen 6 bzw. 8 mehr oder weniger gegen den Folienschlauch gedrückt werden können.

## Patentansprüche

1. Blasfolienanlage mit einer Flachlegung (4) bestehend aus Latten oder Rollen, **dadurch gekennzeichnet, dass** im oberen Bereich der Flachlegung (4) Bürstenrollen (6, 8) mit schräg nach außen gerichteten Borsten (5.1, 5.2; 7.1, 7.2) angebracht sind, die eine Spreizwirkung auf die Folie nach außen bewirken.

2. Flachlegung nach Anspruch 1, **dadurch gekennzeichnet, dass** mindestens die oberste Walze als Spreizwalze (6) ausgebildet ist.

3. Flachlegung nach Anspruch 1, **dadurch gekennzeichnet, dass** eine Vielzahl von Spreizwalzen (6) in der oberen Hälfte der Flachlegung angeordnet sind.

4. Flachlegung nach Anspruch 1-3, **dadurch gekennzeichnet, dass** als Spreizwalze eine Bürstenwalze (8) mit spiralförmig angeordneten Borsten (7.1, 7.2) eingesetzt wird.

5. Flachlegung nach Anspruch 1-4, **dadurch gekennzeichnet, dass** die einzelnen Spreizwalzen (6) oder (8) individuell quer zur Folienlängsrichtung verschiebbar sind.
